# EUROPEAN PATENT APPLICATION

(11) **EP 4 436 068 A1**
(43) Date of publication of application: **25.09.2024**
(21) Application number: 22909774.6
(22) Date of filing: 08.12.2022
(51) Int. Cl.: H04B 17/12, H04B 7/06

(54) **ANTENNA TUNING METHOD AND APPARATUS, AND ELECTRONIC DEVICE AND READABLE STORAGE MEDIUM**

(30) Priority: 24.12.2021 CN 202111605370
(71) Applicant: Huawei Technologies Co., Ltd., Shenzhen, Guangdong 518129 (CN)
(72) Inventor: LI, Xiaoqian, Shenzhen, Guangdong 518129 (CN); HU, Danting, Shenzhen, Guangdong 518129 (CN); YANG, Yuchan, Shenzhen, Guangdong 518129 (CN); WU, Yanming, Shenzhen, Guangdong 518129 (CN); WANG, Hanyang, Shenzhen, Guangdong 518129 (CN)
(74) Representative: Maiwald GmbH
(86) International application number: PCT/CN2022/137697
(87) International publication number: WO 2023/116459

(57) **Abstract**

Embodiments of this application provide an antenna tuning method and apparatus, an electronic device, and a readable storage medium. The electronic device includes a first radio frequency link and a second radio frequency link. The first radio frequency link includes a component configured to detect an antenna parameter, and the second radio frequency link includes a tunable component. The method includes: obtaining first antenna parameter information of the first radio frequency link by using the component that is in the first radio frequency link and that is configured to detect an antenna parameter; and tuning, based on the first antenna parameter information by using the tunable component in the second radio frequency link, an antenna corresponding to the second radio frequency link. In embodiments of this application, an antenna corresponding to a radio frequency link that does not include an antenna parameter detection component can be tuned.

## Description

This application claims priority to Chinese Patent Application No. 202111605370.4, filed with the China National Intellectual Property Administration on December 24, 2021 and entitled "ANTENNA TUNING METHOD AND APPARATUS, ELECTRONIC DEVICE, AND READABLE STORAGE MEDIUM", which is incorporated herein by reference in its entirety.

### TECHNICAL FIELD

Embodiments of this application relate to computer technologies, and in particular, to an antenna tuning method and apparatus, an electronic device, and a readable storage medium.

### BACKGROUND

An electronic device may include at least one radio frequency line. When the radio frequency link includes a component configured to detect an antenna parameter, the electronic device may tune, based on an antenna parameter detected by the component, an antenna corresponding to the radio frequency line, to improve signal strength of the antenna, thereby improving communication quality of the electronic device.

Currently, some radio frequency links of an electronic device do not include a component configured to detect an antenna parameter. The electronic device cannot obtain an antenna parameter of the radio frequency link, and therefore cannot tune an antenna corresponding to the radio frequency link.

### SUMMARY

Embodiments of this application provide an antenna tuning method and apparatus, an electronic device, and a readable storage medium, to tune an antenna corresponding to a radio frequency link that does not include an antenna parameter detection component.

According to a first aspect, an embodiment of this application provides an antenna tuning method. The antenna tuning method may be executed by an electronic device, or a processor, a chip, or a radio frequency front-end modem modem in the electronic device. The following uses the electronic device as an example for description. The electronic device includes a first radio frequency link and a second radio frequency link, the first radio frequency link includes a component configured to detect an antenna parameter, and the second radio frequency link includes a tunable component. In an embodiment, the second radio frequency link does not include a component configured to detect an antenna parameter. Alternatively, in an embodiment, the second radio frequency link includes a component configured to detect an antenna parameter.

In the method, the electronic device may obtain first antenna parameter information of the first radio frequency link by using the component that is in the first radio frequency link and that is configured to detect an antenna parameter; and tune, based on the first antenna parameter information by using the tunable component in the second radio frequency link, an antenna corresponding to the second radio frequency link.

In embodiments of this application, the electronic device may tune, based on first antenna parameter information of a radio frequency link that includes a detector, an antenna corresponding to a radio frequency link that does not include a detector, thereby improving communication quality of the antenna.

In a possible implementation, the electronic device may generate a control signal based on the first antenna parameter information, to tune, based on the control signal by using the tunable component, the antenna corresponding to the second radio frequency link. For example, the electronic device may store a signal mapping relationship between a first antenna parameter variation and the control signal, and the electronic device may obtain, from the signal mapping relationship based on the first antenna parameter variation, control information mapped to the first antenna parameter variation. It should be understood that the control signal is used to tune the tunable component in the second radio frequency link.

In a possible implementation, the electronic device may obtain second antenna parameter information of the second radio frequency link based on the first antenna parameter information, to tune, based on the second antenna parameter information by using the tunable component, the antenna corresponding to the second radio frequency link. The electronic device may obtain the second antenna parameter information based on the first antenna parameter information and a mapping relationship, where the mapping relationship is a mapping relationship between antenna parameter information of the first radio frequency link and antenna parameter information of the second radio frequency link. It should be understood that the mapping relationship may be preset in the electronic device. For a process of obtaining the mapping relationship, refer to related descriptions in a second aspect.

In an embodiment, the electronic device may first determine whether the mapping relationship includes the first antenna parameter information. If the mapping relationship includes the first antenna parameter information, the electronic device may obtain the second antenna parameter information based on the first antenna parameter information and the mapping relationship.

In embodiments of this application, the electronic device may determine, based on a mapping relationship preset in the electronic device and first antenna parameter information of a radio frequency link that includes a detector, second antenna information of a radio frequency link that does not include a detector, to tune, based on the second antenna parameter information, an antenna corresponding to the radio frequency link that does not include a detector. This can improve communication quality of the antenna, and has high tuning precision.

In a possible implementation, the first antenna parameter information may include a first antenna parameter and/or a first antenna parameter variation.

The first antenna parameter in embodiments of this application includes a frequency of a resonance location of an antenna corresponding to the first radio frequency link, and/or a location of the frequency in a Smith chart, and/or an input impedance of the antenna, and/or an amplitude and a phase of a reflection coefficient of the antenna; and the first antenna parameter variation includes a frequency offset, and/or a circle chart offset distance, and/or an impedance variation, where the circle chart offset distance is a vector distance.

The frequency offset includes an offset of a frequency. Alternatively, the frequency offset includes an offset of a frequency and a variation of an amplitude of a reflection coefficient at the frequency.

In a possible implementation, the first radio frequency link corresponds to a first antenna, the second radio frequency link corresponds to a second antenna, and the mapping relationship is a mapping relationship between antenna parameter information of the first antenna and antenna parameter information of the second antenna.

In a possible implementation, the first radio frequency link and the second radio frequency link correspond to a same antenna, the first radio frequency link works on a first frequency band, the second radio frequency link works on a second frequency band, and the first frequency band and the second frequency band are different or the same; and the mapping relationship is a mapping relationship between antenna parameter information of the first frequency band and antenna parameter information of the second frequency band.

In a possible implementation, the mapping relationship is a mapping relationship between the antenna parameter information of the first radio frequency link, the antenna parameter information of the second radio frequency link, and a status of the electronic device, and the status of the electronic device includes: a state in which an object is in contact with the electronic device, and a state in which no object is in contact with the electronic device.

In this implementation, that the electronic device may determine the status of the electronic device based on the antenna parameter information of the first radio frequency link, and obtain the status of the electronic device may be applicable to a plurality of other scenarios. The electronic device may obtain the status of the electronic device based on the first antenna parameter information, the second antenna parameter information, and the mapping relationship.

The object in contact with the electronic device includes a human body and a non-human body, and the non-human body includes a cover.

Correspondingly, when the object in contact with the electronic device is a cover, the status of the electronic device includes a cover state. When the cover is a metal cover or a magnetic attraction cover, the metal cover or the magnetic attraction cover affects antenna performance of the electronic device, for example, reduces communication quality of the antenna. In this implementation, the electronic device outputs prompt information in response to that the status of the electronic device is the cover state, where the prompt information indicates that a cover that is in contact with the electronic device affects communication quality of an antenna in the electronic device. Therefore, a user may remove the cover or replace the cover with another cover, to reduce impact of the cover on antenna performance.

When both the first radio frequency link and the second radio frequency link include a component configured to detect an antenna parameter, an antenna corresponding to the radio frequency link may be tuned based on an antenna parameter that is of the radio frequency link and that is detected by a detector, and a variation that is obtained by mapping an antenna parameter variation of another radio frequency link to the antenna parameter of the radio frequency link.

The electronic device may obtain third antenna parameter information of the second radio frequency link by using the component that is in the second radio frequency link and that is configured to detect an antenna parameter, to tune, based on the second antenna parameter information and the third antenna parameter information, the antenna corresponding to the second radio frequency link.

In this implementation, because the electronic device combines a plurality of factors, namely, the antenna parameter of the radio frequency link detected by the detector and the variation that is obtained by mapping the antenna parameter variation of the another radio frequency link to the antenna parameter of the radio frequency link, antenna tuning precision can be improved.

According to a second aspect, an embodiment of this application provides an antenna tuning method. The antenna tuning method describes a process of obtaining a mapping relationship applied in the first aspect, and specifically includes: obtaining a mapping relationship, where the mapping relationship is a mapping relationship between antenna parameter information of a first radio frequency link in an electronic device and antenna parameter information of a second radio frequency link in the electronic device; and presetting the mapping relationship in the electronic device.

In a possible implementation, the antenna parameter information of the first radio frequency link is first antenna parameter information, and the first antenna parameter information includes a first antenna parameter and/or a first antenna parameter variation.

In a possible implementation, the first antenna parameter information includes the first antenna parameter, and the obtaining a mapping relationship includes: obtaining an N1^{th} test antenna parameter of the first radio frequency link and an N2^{th} test antenna parameter of the second radio frequency link that are of the electronic device in different states, where the different states are that different objects are in contact with the electronic device; and correspondingly storing the N1^{th} test antenna parameter, the N2^{th} test antenna parameter, and the objects in contact with the electronic device, to obtain the mapping relationship, where the first antenna parameter includes the N1^{th} test antenna parameter of the first radio frequency link of the electronic device in each state.

In a possible implementation, the first antenna parameter information includes the first antenna parameter variation, and before the obtaining an N1^{th} test antenna parameter of the first radio frequency link and an N2^{th} test antenna parameter of the second radio frequency link that are of the electronic device in different states, the method further includes: obtaining a first test antenna parameter of the first radio frequency link and a second test antenna parameter of the second radio frequency link that are of the electronic device in a first state, where the first state is that no object is in contact with the electronic device; obtaining a difference between the first test antenna parameter and the N1^{th} test antenna parameter, to obtain the first antenna parameter variation; obtaining a difference between the second test antenna parameter and the N2^{th} test antenna parameter, to obtain a second antenna parameter variation; and correspondingly storing the first antenna parameter variation, the second antenna parameter variation, and the objects in contact with the electronic device, to obtain the mapping relationship.

In a possible implementation, the object includes a human body or a non-human body, and the non-human body includes a cover.

According to a third aspect, an embodiment of this application provides an antenna tuning apparatus. The antenna tuning apparatus may be an electronic device, or a processor, a chip, or a modem in an electronic device. The antenna tuning apparatus may include:
a detection module, configured to obtain first antenna parameter information of a first radio frequency link; and
a tuning module, configured to tune, based on the first antenna parameter information by using a tunable component in a second radio frequency link, an antenna corresponding to the second radio frequency link.

In a possible implementation, the tuning module is specifically configured to: generate a control signal based on the first antenna parameter information, and tune, based on the control signal by using the tunable component, the antenna corresponding to the second radio frequency link.

In a possible implementation, the tuning module is specifically configured to: obtain second antenna parameter information of the second radio frequency link based on the first antenna parameter information, and tune, based on the second antenna parameter information by using the tunable component, the antenna corresponding to the second radio frequency link.

In a possible implementation, the tuning module is specifically configured to obtain the second antenna parameter information based on the first antenna parameter information and a mapping relationship, where the mapping relationship is a mapping relationship between antenna parameter information of the first radio frequency link and antenna parameter information of the second radio frequency link.

In a possible implementation, the first antenna parameter information includes a first antenna parameter and/or a first antenna parameter variation.

In a possible implementation, the first antenna parameter includes a frequency of a resonance location of an antenna corresponding to the first radio frequency link, and/or a location of the frequency in a Smith chart, and/or an input impedance of the antenna, and/or an amplitude and a phase of a reflection coefficient of the antenna; and the first antenna parameter variation includes a frequency offset, and/or a circle chart offset distance, and/or an impedance variation, where the circle chart offset distance is a vector distance; and the frequency offset includes an offset of a frequency, or the frequency offset includes an offset of a frequency and a variation of an amplitude of a reflection coefficient at the frequency.

In a possible implementation, the first radio frequency link corresponds to a first antenna, the second radio frequency link corresponds to a second antenna, and the mapping relationship is a mapping relationship between antenna parameter information of the first antenna and antenna parameter information of the second antenna.

In a possible implementation, the first radio frequency link and the second radio frequency link correspond to a same antenna, the first radio frequency link works on a first frequency band, the second radio frequency link works on a second frequency band, and the first frequency band and the second frequency band are different or the same; and the mapping relationship is a mapping relationship between antenna parameter information of the first frequency band and antenna parameter information of the second frequency band.

In a possible implementation, the mapping relationship is a mapping relationship between the antenna parameter information of the first radio frequency link, the antenna parameter information of the second radio frequency link, and a status of the electronic device, and the status of the electronic device includes: a state in which an object is in contact with the electronic device, and a state in which no object is in contact with the electronic device.

The tuning module is configured to obtain the status of the electronic device based on the first antenna parameter information, the second antenna parameter information, and the mapping relationship.

In a possible implementation, the object includes a human body and a non-human body, and the non-human body includes a cover.

In a possible implementation, the status of the electronic device includes a cover state.

The tuning module is configured to output prompt information in response to that the status of the electronic device is the cover state, where the prompt information indicates that a cover that is in contact with the electronic device affects communication quality of an antenna in the electronic device, and the cover is a metal cover or a magnetic attraction cover.

In a possible implementation, the tuning module is further configured to determine whether the mapping relationship includes the first antenna parameter information.

In a possible implementation, the second radio frequency link does not include a component configured to detect an antenna parameter.

In a possible implementation, the second radio frequency link includes a component configured to detect an antenna parameter.

In a possible implementation, the tuning module is further configured to: obtain third antenna parameter information of the second radio frequency link by using the component that is in the second radio frequency link and that is configured to detect an antenna parameter; and tune, based on the second antenna parameter information and the third antenna parameter information, the antenna corresponding to the second radio frequency link.

According to a fourth aspect, an embodiment of this application provides an antenna tuning apparatus. The antenna tuning apparatus may be an electronic device, a test device, a chip in an electronic device, or a chip in a test device. The antenna tuning apparatus may include:
a processing module, configured to obtain a mapping relationship, where the mapping relationship is a mapping relationship between antenna parameter information of a first radio frequency link in an electronic device and antenna parameter information of a second radio frequency link in the electronic device; and
a storage module, configured to preset the mapping relationship in the electronic device.

In a possible implementation, the antenna parameter information of the first radio frequency link is first antenna parameter information, and the first antenna parameter information includes a first antenna parameter and/or a first antenna parameter variation.

In a possible implementation, the first antenna parameter information includes the first antenna parameter.

The processing module is specifically configured to: obtain an N1^{th} test antenna parameter of the first radio frequency link and an N2^{th} test antenna parameter of the second radio frequency link that are of the electronic device in different states, where the different states are that different objects are in contact with the electronic device; and correspondingly store the N1^{th} test antenna parameter, the N2^{th} test antenna parameter, and the objects in contact with the electronic device, to obtain the mapping relationship, where the first antenna parameter includes the N1^{th} test antenna parameter of the first radio frequency link of the electronic device in each state.

In a possible implementation, the first antenna parameter information includes the first antenna parameter variation.

The processing module is further configured to: obtain a first test antenna parameter of the first radio frequency link and a second test antenna parameter of the second radio frequency link that are of the electronic device in a first state, where the first state is that no object is in contact with the electronic device; obtain a difference between the first test antenna parameter and the N1^{th} test antenna parameter, to obtain the first antenna parameter variation; obtain a difference between the second test antenna parameter and the N2^{th} test antenna parameter, to obtain a second antenna parameter variation; and correspondingly store the first antenna parameter variation, the second antenna parameter variation, and the objects in contact with the electronic device, to obtain the mapping relationship.

In a possible implementation, the object includes a human body or a non-human body, and the non-human body includes a cover.

According to a fifth aspect, an embodiment of this application provides an electronic device. The electronic device may include a processor and a memory. The memory is configured to store computer executable program code, where the program code includes instructions; and when the processor executes the instructions, the instructions enables the electronic device to perform the method according to the first aspect and the second aspect.

According to a sixth aspect, this application provides a computer program product that includes instructions. When the computer program product runs on a computer, the computer is enabled to perform the method according to the first aspect and the second aspect.

According to a seventh aspect, an embodiment of this application provides a computer-readable storage medium. The computer-readable storage medium stores instructions, and when the instructions are run on a computer, the computer is enabled to perform the method according to the first aspect and the second aspect.

For beneficial effects of possible implementations of the second aspect to the seventh aspect, refer to beneficial effects brought by the first aspect. Details are not described herein again.

### BRIEF DESCRIPTION OF DRAWINGS

FIG. 1 is a schematic diagram of a structure of an electronic device;
FIG. 2 is a schematic diagram of another structure of an electronic device;
FIG. 3 is a schematic diagram of obtaining an antenna parameter according to an embodiment of this application;
FIG. 4 is another schematic diagram of obtaining an antenna parameter according to an embodiment of this application;
FIG. 5 is a schematic diagram of a frequency offset according to an embodiment of this application;
FIG. 6 is a schematic diagram of a circle chart offset distance according to an embodiment of this application;
FIG. 7 is a schematic flowchart of an embodiment of an antenna tuning method according to an embodiment of this application;
FIG. 8 is a schematic diagram of an interface of an electronic device according to an embodiment of this application;
FIG. 9 is a schematic diagram of another structure of an electronic device;
FIG. 10 is a schematic flowchart of another embodiment of an antenna tuning method according to an embodiment of this application;
FIG. 11 is a schematic flowchart of another embodiment of an antenna tuning method according to an embodiment of this application;
FIG. 12 is a schematic diagram of a structure of an antenna tuning apparatus according to an embodiment of this application; and
FIG. 13 is a schematic diagram of another structure of an electronic device according to an embodiment of this application.

### DESCRIPTION OF EMBODIMENTS

An electronic device in embodiments of this application may be referred to as user equipment (user equipment, UE), a terminal (terminal), or the like. For example, the electronic device may be a mobile phone, a tablet computer (portable Android device, PAD), a personal digital assistant (personal digital assistant, PDA), a handheld device with a wireless communication function, a computing device, a vehicle-mounted device or a wearable device, a virtual reality (virtual reality, VR) terminal device, an augmented reality (augmented reality, AR) terminal device, a wireless terminal in industrial control (industrial control), or a wireless terminal in smart home (smart home), and a form of the electronic device is not specifically limited in embodiments of this application.

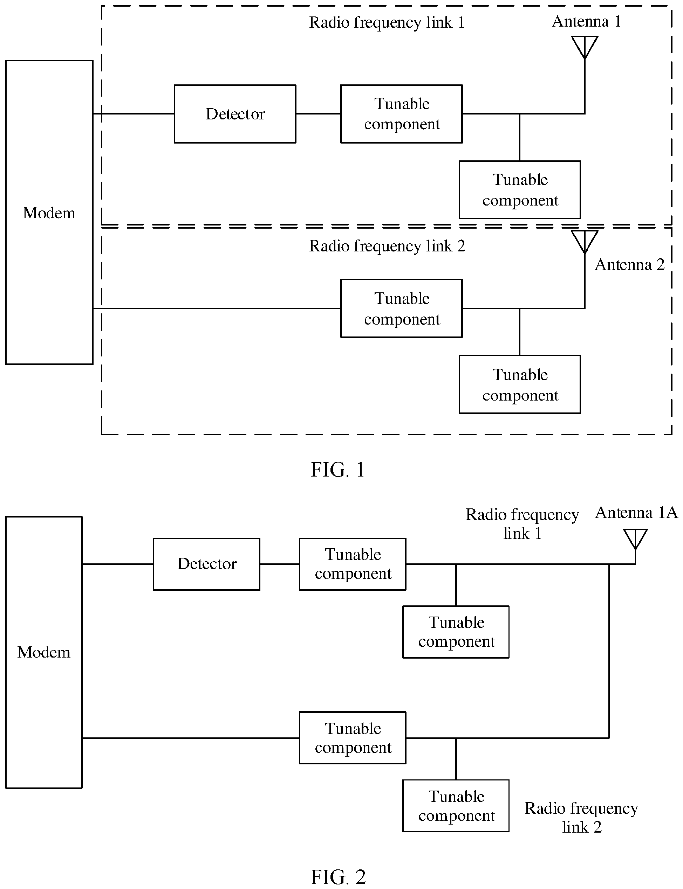

FIG. 1 is a schematic diagram of a structure of the electronic device. Refer to FIG. 1. The electronic device may include a radio frequency front-end modem (modem) and at least one radio frequency link. In FIG. 1, an example in which the at least one radio frequency link includes a radio frequency link 1 and a radio frequency link 2 is used for representation. For each radio frequency link, the radio frequency link may include at least one tunable component and an antenna. The antenna is configured to transmit and receive radio frequency signals. The tunable component is configured to tune an antenna by the modem (for example, impedance tuning and/or aperture tuning). The impedance tuning may be understood as: adjusting an impedance of an antenna and an impedance of a signal transmitter of the antenna, so that the impedance of the antenna matches the impedance of the signal transmitter. This ensures that the antenna can transmit a radio frequency signal with high strength. The aperture tuning may be understood as: changing an operating frequency of an antenna by adjusting an electrical length of the antenna through matching. In an embodiment, the modem may be replaced with a processor or a chip having a processing capability. The following embodiments uses the modem as an example for description.

The radio frequency link 1 and the radio frequency link 2 each have a corresponding antenna. For example, the radio frequency link 1 corresponds to an antenna 1, and the radio frequency link 2 corresponds to an antenna 2. The radio frequency link 1 and the radio frequency link 2 may work on a same frequency band (frequency band) or different frequency bands. For radio frequency links shown in FIG. 1, when the radio frequency link 1 and the radio frequency link 2 work on a same frequency band, the radio frequency link 1 and the radio frequency link 2 may be referred to as inter-interface intra-frequency. When the radio frequency link 1 and the radio frequency link 2 work on different frequency bands, the radio frequency link 1 and the radio frequency link 2 may be referred to as inter-interface inter-frequency.

In an embodiment, for an antenna, the antenna may be a transmit (transport, TX) antenna and/or a receive (receive, RX) antenna. The TX antenna is configured to transmit a signal, and the RX antenna is configured to receive a signal. In other words, if the antenna is a TX antenna, it may be said that the antenna or a radio frequency link corresponding to the antenna has a transmitting function. If the antenna is an RX antenna, it may be considered that the antenna or a radio frequency link corresponding to the antenna has a receiving function. If the antenna is a TX antenna and an RX antenna, it may be considered that the antenna or a radio frequency link corresponding to the antenna has a transmitting function and a receiving function.

Refer to FIG. 1. The radio frequency link 1 may include a detector configured to detect an antenna parameter (referred to as a detector for short). For example, the detector may include but is not limited to a coupler. The radio frequency link 2 does not include a detector. The detector is configured to collect an antenna parameter. The antenna parameter may include but is not limited to: a resonance frequency (or a resonance center frequency/frequency) of an antenna corresponding to the radio frequency link 1, a location of a center frequency/frequency in a Smith (smith) chart, an input impedance of the antenna corresponding to the radio frequency link 1, a reflection coefficient of the antenna corresponding to the radio frequency link 1, or the like. The reflection coefficient may include an amplitude and/or a phase. The reflection coefficient described in the following embodiments represents "an amplitude and a phase of the reflection coefficient".

The "resonance/resonance frequency" in embodiments of this application is also referred to as a resonance frequency. The resonance frequency may be a frequency at which an imaginary part of an antenna input impedance is zero. The resonance frequency may have a frequency range, namely, a frequency range in which resonance occurs. For example, the resonance frequency may be a frequency range in which a return loss characteristic is less than - 6 dB. A frequency corresponding to a strongest resonance point is a central frequency point frequency. A return loss characteristic of a center frequency can be less than -20 dB.

In an embodiment, the electronic device may further include an application processor that is not shown in FIG. 1. In a scenario in which an antenna transmits a signal, the application processor is configured to send service data to a modem.

FIG. 2 is a schematic diagram of another structure of an electronic device. Different from FIG. 1, a radio frequency link 1 and a radio frequency link 2 in FIG. 2 share one antenna 1A. In this example, because the two radio frequency links share one antenna 1A, to ensure normal signal transmission without collision, the radio frequency link 1 and the radio frequency link 2 work on different frequency bands. In this example, the radio frequency link 1 and the radio frequency link 2 may be referred to as intra-interface inter-frequency. For example, the radio frequency link 1 is, for example, a GPS radio frequency link for transmitting a global positioning system (global positioning system, GPS) signal, and the radio frequency link 2 is, for example, a Wi-Fi radio frequency link for transmitting a Wi-Fi signal. The GPS radio frequency link and the Wi-Fi radio frequency link work on different frequency bands, but use one feed point (antenna) to receive and transmit a signal.

In an embodiment, as shown in FIG. 2, the radio frequency link 1 and the radio frequency link 2 may work on a same frequency band, that is, the radio frequency link 1 and the radio frequency link 2 may be referred to as intra-interface intra-frequency.

In an embodiment, a structure of an electronic device may alternatively be a combination of FIG. 1 and FIG. 2, that is, the electronic device may include an "inter-interface inter-frequency" radio frequency link and/or an "inter-interface intra-frequency" radio frequency link, and may further include an intra-interface inter-frequency radio frequency link. In an embodiment, a radio frequency link may be deployed on a radio frequency chip. The intra-interface in the intra-interface intra-frequency/inter-frequency means that different pins of a radio frequency chip lead out a plurality of signal lines, and the signal lines are connected to a same feed point by using a switch or a combiner. The inter-interface in the inter-interface intra-frequency/inter-frequency means that different pins of a radio frequency chip lead out a plurality of signal lines, and the signal lines are connected to feed points of different antennas.

In the electronic devices shown in FIG. 1 and FIG. 2, there is no detector in the radio frequency link 2, and an antenna parameter of the radio frequency link 2 cannot be detected. Therefore, the modem cannot tune, based on the antenna parameter of the radio frequency link 2, an antenna corresponding to the radio frequency link 2. The antenna corresponding to the radio frequency link 2 may be understood as the antenna 2 in FIG. 1, or an antenna used when the radio frequency link 2 in FIG. 2 works. In an embodiment, the modem may tune an operating frequency band of an antenna corresponding to the radio frequency link 2, but tuning precision is low. In addition, for an antenna that does not include a TX function, the modem cannot obtain a reflection coefficient that is of the antenna and that is collected by the detector, and therefore cannot tune the antenna based on the reflection coefficient of the antenna. This affects tuning precision of the antenna.

In conclusion, for an antenna that does not include a detector or a TX function and that is in a radio frequency link, the modem cannot obtain a corresponding antenna parameter. Consequently, precision of tuning the antenna by the modem is low, and the antenna cannot even be tuned. This affects communication quality of the electronic device.

In embodiments of this application, an electronic device (for example, the modem) may perform, based on an antenna parameter of a radio frequency link (for example, the radio frequency link 1) that includes a detector, status detection and tuning on an antenna corresponding to a radio frequency link (for example, the radio frequency link 2) that does not include a detector, to resolve a conventional-technology problem that status detection and tuning cannot be performed on an antenna corresponding to a radio frequency link that does not include a detector.

In embodiments of this application, an electronic device (for example, the modem) may tune, based on an antenna parameter of a radio frequency link that has a TX function, an antenna corresponding to a radio frequency link that does not include a TX function, to resolve a conventional-technology problem that an antenna corresponding to a radio frequency link that does not include a TX function cannot be detected and tuned. The following uses an example in which "A modem tunes, based on an antenna parameter of a radio frequency link that includes a detector, an antenna corresponding to a radio frequency link that does not include a detector" for description. For an example of a TX function, refer to descriptions in the following embodiments.

Before antenna tuning methods provided in embodiments of this application are described, a mapping relationship in embodiments of this application and a process of obtaining the mapping relationship are first described.

### 1. Mapping relationship:

The mapping relationship may be a mapping relationship between antenna parameter information of a first frequency band and antenna parameter information of a second frequency band. The antenna parameter information may include an antenna parameter and/or an antenna parameter variation. In other words, the mapping relationship may be a mapping relationship between an antenna parameter variation (and/or an antenna parameter) of the first radio frequency link and an antenna parameter variation (and/or an antenna parameter) of the second radio frequency link. For example, the mapping relationship may be a mapping relationship between an antenna parameter variation (and/or an antenna parameter) of a radio frequency link 1 and an antenna parameter variation (and/or an antenna parameter) of a radio frequency link 2. In an embodiment, a mapping relationship may be stored in a modem, or stored in a preset location of an electronic device, and may be queried and used by the modem.

In an embodiment, different radio frequency links may be distinguished by using identifiers (such as numbers) of radio frequency links, or different radio frequency links may be distinguished by using antennas corresponding to radio frequency links (as shown in the scenario in FIG. 1), or different radio frequency links may be distinguished by using frequency bands corresponding to radio frequency links (as shown in the intra-interface inter-frequency scenario in FIG. 2). In embodiments of this application, different antennas (different feed points) should be considered as corresponding to different radio frequency links, and different operating frequency bands in a same antenna (a same feed point) should be considered as corresponding to different radio frequency links.

In an embodiment, in an intra-interface intra-frequency/inter-frequency radio frequency link, different pins of a radio frequency chip may lead out a plurality of signal lines, and the signal lines are connected to a same feed point by using a switch or a combiner. However, in an inter-interface intra-frequency/inter-frequency radio frequency link, different pins of a radio frequency chip lead out a plurality of signal lines, and the signal lines are connected to feed points of different antennas. In an embodiment, at least one signal line on a radio frequency chip corresponds to one radio frequency link. Therefore, different signal lines connected to feed points may be used to represent different radio frequency links.

The antenna parameter includes but is not limited to: a reflection coefficient, a location of a frequency in a Smith chart, an impedance, or the like. Correspondingly, the antenna parameter variation may include: a reflection coefficient variation, a frequency offset, an offset distance and a slope (or an angle) of a frequency in a circle chart, or an impedance variation.

In an embodiment, when an operating frequency of an antenna changes, a frequency offset may include an offset of the operating frequency of the antenna, for example, a difference between a frequency 1 and a frequency 2. Alternatively, in addition to an offset of the operating frequency of the antenna, the frequency offset may further include a variation of an amplitude of a reflection coefficient at the frequency. The frequency offset may include a difference between a frequency 1 and a frequency 2, and a difference between an amplitude of a reflection coefficient at the frequency 1 and an amplitude of a reflection coefficient at the frequency 2.

In an embodiment, when an operating frequency of an antenna does not change, a frequency offset may include: a change of an amplitude of a reflection coefficient at a same frequency, and the like.

The frequency offset, the impedance variation, and the offset distance and the angle in the circle chart may be obtained through conversion. For a conversion manner, refer to related descriptions in the conventional technology. Details are not described herein again.

For the electronic device shown in FIG. 1, different radio frequency links correspond to respective antennas, and operating frequency bands of different radio frequency links may be the same or different. To accurately distinguish between different radio frequency links, the different radio frequency links may be represented by using antenna identifiers. An antenna identifier may include but is not limited to a number of an antenna, a location of the antenna in an electronic device, and the like. For the electronic device shown in FIG. 1, a mapping relationship may be referred to as a first mapping relationship. The first mapping relationship is a mapping relationship between a parameter variation of a first antenna and a parameter variation of a second antenna. For example, the first antenna may be the antenna 1, and the second antenna may be the antenna 2.

For the electronic device shown in FIG. 2, because a plurality of radio frequency links share one antenna, the radio frequency links cannot be distinguished by using the antenna. However, different radio frequency links in FIG. 2 work on different frequency bands. Therefore, different radio frequency links can be accurately distinguished by frequency bands. For example, for the electronic device shown in FIG. 2, a mapping relationship may be referred to as a second mapping relationship. The second mapping relationship is a mapping relationship between antenna parameter information of a first frequency band and antenna parameter information of a second frequency band. For the antenna parameter information, refer to the foregoing related descriptions. For example, the first frequency band may be an operating frequency band of a GPS radio frequency link, and the second frequency band may be an operating frequency band of a Wi-Fi radio frequency link.

### 2. Process of obtaining the mapping relationship:

It should be noted that embodiments of this application is applicable to a scenario in which different objects (or media) are in contact with an electronic device, this changes an antenna parameter, and the electronic device performs status detection and tuning on an antenna. The object may include a human body and a non-human body. The human body is, for example, a user who holds the electronic device by hand, and the non-human body is, for example, an object like a cover of the electronic device or a table. The cover includes but is not limited to: a silicone cover, a metal cover, a magnetic attraction cover, and the like. In an embodiment, a relative dielectric constant of the cover is between 1 and 50.

That different objects are in contact with the electronic device can change an antenna parameter. For example, that a user installs a silicone cover, a metal cover, or a magnetic attraction cover on the electronic device, and that the user holds the electronic device by hand each change an antenna parameter in the electronic device. In addition, the metal cover and the magnetic attraction cover deteriorate communication quality of an antenna. Therefore, when different objects are in contact with the electronic device, the electronic device needs to tune the antenna based on the antenna parameter, to improve communication quality of the antenna.

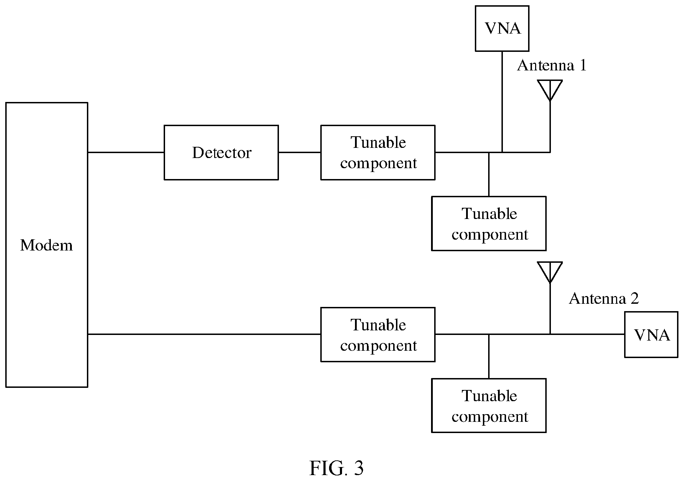

Refer to FIG. 3. In a design and manufacturing phase of an electronic device, a test person may connect an external test device to a location between an antenna and a tunable component in the radio frequency link 1 and connect an external test device to a location between an antenna and a tunable component in the radio frequency link 2 shown in FIG. 1 and FIG. 2, and the test device is configured to output an antenna parameter of the radio frequency link. In FIG. 3, an example in which external test devices are connected based on FIG. 1 is used. In an embodiment, a test device may be a vector network analyzer (vector network analyzer, VNA).

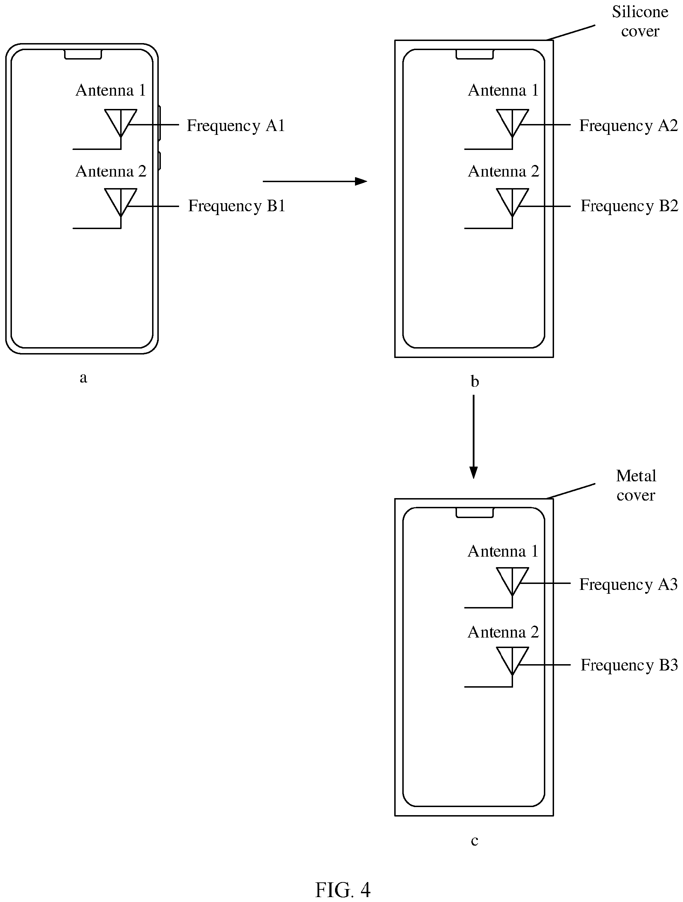

Based on FIG. 3, in embodiments of this application, a mapping relationship may be obtained in the following manners:
Manner 1: An example in which an antenna parameter includes a frequency is used. For the electronic device shown in FIG. 1, refer to a in FIG. 4, when the electronic device is in a first state, a first frequency at which each antenna in the electronic device works is tested, where the first state is a state in which no object is in contact with the electronic device. In embodiments of this application, the antenna parameter obtained through testing in the first state may be used as a reference value. For example, in the first state, vector network analyzers output a frequency A1 of an antenna 1 and a frequency B1 of an antenna 2. In an embodiment, a frequency of the antenna 1 obtained through testing in the first state may be referred to as a first test antenna parameter, and a frequency of the antenna 2 obtained through testing in the first state may be referred to as a second test antenna parameter.

A test person may test an antenna parameter and/or an antenna parameter variation of a first radio frequency link and an antenna parameter and/or an antenna parameter variation of a second radio frequency link in an electronic device that is in contact with different objects (or media), to establish a mapping relationship between the antenna parameter and/or the antenna parameter variation of the first radio frequency link and the antenna parameter and/or the antenna parameter variation of the second radio frequency link. The antenna parameter variation is used as an example for description herein.

For example, a test person is in contact with an electronic device by using different media (which may be replaced with objects), to obtain an antenna parameter variation Δant1_{meidum}=Sant1_{-FS}-Sant1_{medium} of a first radio frequency link, and an antenna parameter variation Δant2_{meidum}=Sant2_{-FS}-Sant2_{medium} of a second radio frequency link. Δant1_{medium} represents the antenna parameter variation of the first radio frequency link, Sant1_{-FS} represents an antenna parameter of the first radio frequency link in the first state, Sant1_{meidum} represents an antenna parameter that is of the first radio frequency link and that is obtained when different objects are in contact with the electronic device, Δant2_{meidum} represents the antenna parameter variation of the second radio frequency link, and Sant2_{meidum} represents an antenna parameter that is of the second radio frequency link and that is obtained when different objects are in contact with the electronic device. In this embodiment of this application, a mapping relationship between the antenna parameter variation Δant1_{medium} of the first radio frequency link and the antenna parameter variation Δant2_{medium} of the second radio frequency link may be established as follows: Δant1_{medium}→Δant2_{medium}. In this embodiment, for example, when the electronic device is in contact with an object, an antenna parameter of the first radio frequency link generates a variation Δant1_{medium}. In this case, a variation Δant2_{medium} that is generated by an antenna parameter of the second radio frequency link may be obtained by using the established mapping relationship, to further obtain that a status of the second radio frequency link is: Sant2_{medium}=Sant2_{-FS}-Δant2_{medium}.

The following describes a specific process of establishing the mapping relationship.

For example, refer to b in FIG. 4. A test person installs a silicone cover on the electronic device, so that the electronic device is in a second state, to test a second frequency at which each antenna in the electronic device in the second state works. For example, in the second state, the vector network analyzers output a frequency A2 of the antenna 1 and a frequency B2 of the antenna 2. In an embodiment, the second state may be one of N states of the electronic device other than the first state. In an embodiment, a frequency of the antenna 1 may be referred to as an N1^{th} test antenna parameter, and a frequency of the antenna 2 may be referred to as an N2^{th} test antenna parameter.

In this way, the test person may calculate a frequency offset of each antenna before and after the silicone cover is installed on the electronic device, and then map and store the frequency offset of each antenna. For example, before and after the silicone cover is installed on the electronic device, a frequency offset of the antenna 1 is Δ silica gel 11=A2-A1, and a frequency offset of the antenna 2 is Δ silica gel 12=B2-B1. In this case, "Δ silica gel 11" and "Δ silica gel 12" may be mapped and stored. For "Δ silica gel 11", Δ represents a frequency offset, silica gel represents that a silicone cover is installed on the electronic device, the first 1 represents that an antenna parameter is a value of the frequency offset, and the second 1 represents the antenna 1. It should be understood that Δ silica gel 11 is an example for description, and a symbol indicating a frequency offset is not limited in embodiments of this application.

In an embodiment, the test person may alternatively map and store a frequency offset and an antenna parameter (frequency) of each antenna before and after the silicone cover is installed. For example, "Δ silica gel 11, a frequency of the antenna 1 is A1, and a frequency of the antenna 2 is B1" and "Δ silica gel 12, a frequency of the antenna 1 is A2, and a frequency of the antenna 2 is B2" are mapped and stored. That is, the mapping relationship includes a mapping relationship between an antenna parameter of the first antenna, an antenna parameter variation of the first antenna, an antenna parameter of the second antenna, and an antenna parameter variation of the second antenna. Refer to Table 2. It should be understood that in Table 2, "xx" represents an impedance of each antenna, and "yy" represents a location of each antenna in a circle chart.

It may be figured out that a measurement instrument like a vector network analyzer may also output an impedance and a circle chart location of each antenna in the first state and the second state, to obtain an impedance variation and a circle chart offset distance of each antenna before and after the silicone cover is installed on the electronic device. In embodiments of this application, a frequency offset is used as an example for description. For the impedance variation and the circle chart offset distance, refer to related descriptions of the frequency offset.

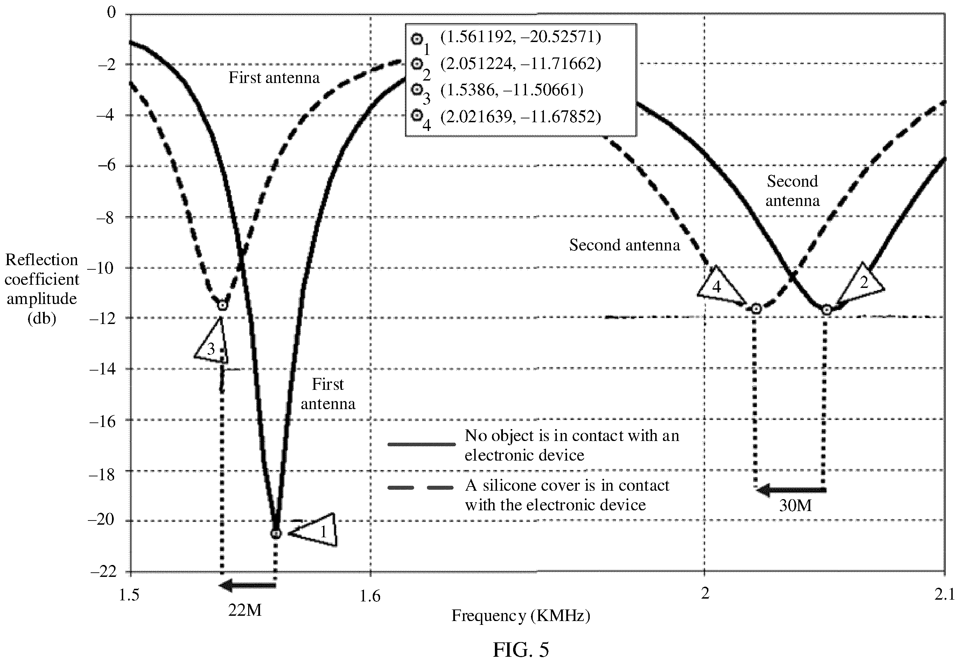

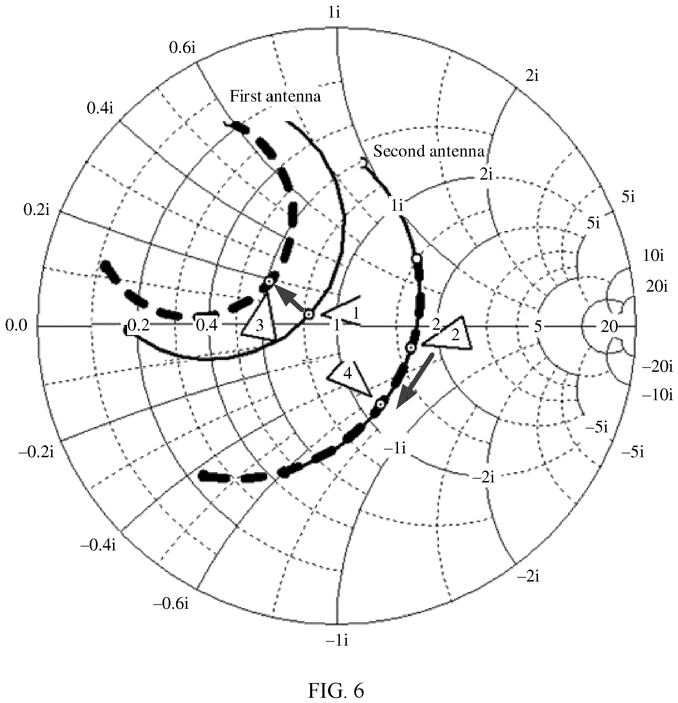

FIG. 5 is a schematic diagram of frequencies of an electronic device in a first state and a second state. For example, in FIG. 5, a horizontal coordinate is a frequency, and a vertical coordinate is a reflection coefficient amplitude (namely, an amplitude of a reflection coefficient). Refer to FIG. 5. When the electronic device is in the first state, a frequency of an antenna 1 is about 1560 MHz, and a frequency of an antenna 2 is about 2051 MHz. When the electronic device is in the second state, a frequency of the antenna 1 is about 1538 MHz, and a frequency of the antenna 2 is about 2021 MHz. Correspondingly, after the electronic device changes from the first state to the second state, a frequency offset of the antenna 1 is approximately -22 MHz, and a frequency offset of the antenna 2 is approximately -30 MHz. It should be understood that, in FIG. 5, a solid line represents that the electronic device is in the first state, and a dashed line represents that the electronic device is in the second state. In FIG. 5, 1, 2, 3, and 4 that are marked by a triangle respectively correspond to locations in a circle chart shown in FIG. 6.

Corresponding to FIG. 5, when the electronic device changes from the first state to the second state, for a circle chart offset distance between the antenna 1 and the antenna 2, refer to FIG. 6. It should be understood that the circle chart offset distance represents a vector distance, for example, a length and an angle that are of an arrow in FIG. 6. It should be understood that a solid line corresponding to the first antenna is used as an example, and the solid line corresponding to the first antenna represents a location that is obtained when the electronic device is in the first state and that is of a frequency and a reflection coefficient amplitude that are of the first antenna in the circle chart. A dashed line corresponding to the first antenna is used as an example. The dashed line corresponding to the first antenna represents a location that is obtained when the electronic device is in the second state and that is of a frequency and a reflection coefficient amplitude that are of the first antenna in the circle chart.

Similarly, refer to c in FIG. 4. The test person installs the metal cover on the electronic device, so that the electronic device is in a third state, to test a third frequency at which each antenna in the electronic device in the third state works. For example, in the third state, test devices such as vector network analyzers output a frequency A3 of the antenna 1 and a frequency B3 of the antenna 2. In an embodiment, the third state may be one of N states of the electronic device other than the first state. In an embodiment, a frequency of the antenna 1 may be referred to as an N1^{th} test antenna parameter, and a frequency of the antenna 2 may be referred to as an N2^{th} test antenna parameter.

The test person may calculate a frequency offset of each antenna before and after the metal cover is installed on the electronic device, and then map and store the frequency offset of each antenna. For example, before and after the metal cover is installed on the electronic device, a frequency offset of the antenna 1 is Δ metal 11=A3-A1, and a frequency offset of the antenna 2 is Δ metal 12=B3-B1. In this case, "Δ metal 11" and "Δ metal 12" may be mapped and stored.

In an embodiment, the test person may alternatively map and store a frequency offset and an antenna parameter (frequency) of each antenna before and after the metal cover is installed. For example, "Δ metal 11, a frequency of the antenna 1 is A1, and a frequency of the antenna 2 is B1" and "Δ metal 12, a frequency of the antenna 1 is A3, and a frequency of the antenna 2 is B3" are mapped and stored.

According to the foregoing steps, the test person may contact different objects with the electronic device, to obtain, through testing, a mapping relationship of antenna parameter variations of antennas before and after the different objects are in contact with the electronic device. The mapping relationship may be shown in Table 1.

**Table 1**

| Antenna | Antenna parameter 1 (frequency offset) variation | | | Antenna parameter 2 (impedance variation) variation | | | Antenna parameter 3 (circle chart offset distance) variation | | | ... |
|---|---|---|---|---|---|---|---|---|---|---|
| | Silicone cover | Metal cover | ... | Silicone cover | Metal cover | ... | Silicone cover | Metal cover | ... | ... |
| Antenna 1 | Δ Silica gel 11 | Δ Metal 11 | ... | Δ Silica gel 21 | Δ Metal 21 | ... | Δ Silica gel 31 | Δ Metal 31 | ... | ... |
| Antenna 2 | Δ Silica gel 12 | Δ Metal 12 | ... | Δ Silica gel 22 | Δ Metal 22 | ... | Δ Silica gel 32 | Δ Metal 32 | ... | ... |
| ... | ... | ... | ... | ... | ... | ... | ... | ... | ... | ... |
| Antenna N | Δ Silica gel 1N | Δ Metal 1N | ... | Δ Silica gel 2N | Δ Metal 2N | ... | Δ Silica gel 3N | Δ Metal 3N | ... | ... |

It should be understood that the mapping relationship shown in Table 1 may be referred to as a first mapping relationship.

**Table 2**

| Antenna | Antenna parameter 1 (frequency offset) variation | | | Antenna parameter 2 (impedance variation) variation | | | Antenna parameter 3 (circle chart offset distance) variation | | | ... |
|---|---|---|---|---|---|---|---|---|---|---|
| | Silicone cover | Metal cover | ... | Silicone cover | Metal cover | ... | Silicone cover | Metal cover | ... | ... |
| Antenna 1 | Δ Silica gel 11, frequency A2 | Δ Metal 11, frequency A3 | ... | Δ Silica gel 21, impedance xx | Δ Metal 21, impedance xx | ... | Δ Silica gel 31, circle chart location YY | Δ Metal 31, circle chart location YY | ... | ... |
| Antenna 2 | Δ Silica gel 12, | Δ Metal 12, | ... | Δ Silica gel 22, | Δ Metal 22, impedance | ... | Δ Silica gel 32, | Δ Metal 32, | ... | ... |
| | frequency B2 | frequency B3 | | impedance xx | xx | | circle chart location YY | circle chart location YY | | |
| ... | ... | ... | ... | ... | ... | ... | ... | ... | ... | ... |
| Antenna N | Δ Silica gel 1N, frequency N2 | Δ Metal 1N, frequency N3 | ... | Δ Silica gel 2N, impedance xx | Δ Metal 2N, impedance xx | ... | Δ Silica gel 3N, circle chart location YY | Δ Metal 3N, circle chart location YY | ... | ... |

It should be understood that a mapping relationship shown in Table 2 may also be referred to as a first mapping relationship, that is, represents a mapping relationship between antenna parameter information of the first antenna and antenna parameter information of the second antenna.

For the electronic device shown in FIG. 2, because the radio frequency link 1 and the radio frequency link 2 share an antenna, a mapping relationship of antenna parameter variations that are obtained when the electronic device is in various states and that correspond to frequency bands may be obtained.

For example, when the electronic device is in the first state, the test person tests a first frequency obtained when each radio frequency link works. For example, in the first state, a frequency of the radio frequency link 1 is a1, and a frequency of the radio frequency link 2 is b1.

The test person installs a silicone cover on the electronic device, so that the electronic device is in the second state, to test a second frequency at which each radio frequency link in the electronic device in the second state works. For example, in the second state, a frequency of the radio frequency link 1 is a2, and a frequency of the radio frequency link 2 is b2. The test person may calculate a frequency offset of each radio frequency link before and after the silicone cover is installed on the electronic device, and then map and store the frequency offset of each radio frequency link. For example, before and after the silicone cover is installed on the electronic device, a frequency offset of the radio frequency link 1 is Δ silica gel 11=a2-a1, and a frequency offset of the radio frequency link 2 is Δ silica gel 12=b2-b1. In this case, "Δ silica gel 11" and "Δ silica gel 12" may be mapped and stored. In an embodiment, the test person may alternatively map and store a frequency offset of each frequency band and an antenna parameter (frequency) before and after the silicone cover is installed. Refer to the foregoing related descriptions. A specific mapping relationship is shown in Table 4.

Similarly, the test person installs a metal cover on the electronic device, so that the electronic device is in the third state, to test a third frequency at which each radio frequency link in the electronic device in the third state works. For example, in the third state, a frequency of the radio frequency link 1 is a3, and a frequency of the radio frequency link 2 is b3. The test person may calculate a frequency offset of each radio frequency link before and after the metal cover is installed on the electronic device, and then map and store the frequency offset of each radio frequency link. For example, before and after the metal cover is installed on the electronic device, a frequency offset of the radio frequency link 1 is Δ metal 11=a3-a1, and a frequency offset of the radio frequency link 2 is Δ metal 12=b3-b1. In this case, "Δ metal 11" and "Δ metal 12" may be mapped and stored. In an embodiment, the test person may alternatively map and store a frequency offset of each frequency band and an antenna parameter (frequency) before and after the metal cover is installed. Refer to the foregoing related descriptions.

According to the foregoing steps, the test person may contact different objects with the electronic device, to obtain, through testing, a mapping relationship of antenna parameter variations of radio frequency links before and after the different objects are in contact with the electronic device. The mapping relationship may be shown in Table 3. Because operating frequency bands of the radio frequency link 1 and the radio frequency link 2 are different, frequency bands may be used to represent different radio frequency links in Table 3.

**Table 3**

| Frequency band | Antenna parameter 1 (frequency offset) variation | | | Antenna parameter 2 (impedance variation) variation | | | Antenna parameter 3 (circle chart offset distance) variation | | | ... |
|---|---|---|---|---|---|---|---|---|---|---|
| | Silicone cover | Metal cover | ... | Silicone cover | Metal cover | ... | Silicone cover | Metal cover | ... | ... |
| Frequency band 1 | Δ Silica gel 11 | Δ Metal 11 | ... | Δ Silica gel 21 | Δ Metal 21 | ... | Δ Silica gel 31 | Δ Metal 31 | ... | ... |
| Frequency | Δ Silica gel | Δ Metal | ... | Δ Silica gel | Δ Metal | ... | Δ Silica gel | Δ Metal | ... | ... |
| band 2 | 12 | 12 | | 22 | 22 | | 32 | 32 | | |
| ... | ... | ... | ... | ... | ... | ... | ... | ... | ... | ... |
| Frequency band N | Δ Silica gel 1N | Δ Metal 1N | ... | Δ Silica gel 2N | Δ Metal 2N | ... | Δ Silica gel 3N | Δ Metal 3N | ... | ... |

It should be understood that the mapping relationship shown in Table 3 may be referred to as a second mapping relationship.

**Table 4**

| Antenna | Antenna parameter 1 (frequency offset) variation | | | Antenna parameter 2 (impedance variation) variation | | | Antenna parameter 3 (circle chart offset distance) variation | | | ... |
|---|---|---|---|---|---|---|---|---|---|---|
| | Silicone cover | Metal cover | ... | Silicone cover | Metal cover | ... | Silicone cover | Metal cover | ... | ... |
| Frequency band 1 | Δ Silica gel 11, frequency A2 | Δ Metal 11, frequency A3 | ... | Δ Silica gel 21, impedance xx | Δ Metal 21, impedance xx | ... | Δ Silica gel 31, circle chart location yy | Δ Metal 31, circle chart location yy | ... | ... |
| Frequency band 2 | Δ Silica gel 12, frequency B2 | Δ Metal 12, frequency B3 | ... | Δ Silica gel 22, impedance xx | Δ Metal 22, impedance xx | ... | Δ Silica gel 32, circle chart location yy | Δ Metal 32, circle chart location yy | ... | ... |
| ... | ... | ... | ... | ... | ... | ... | ... | ... | ... | ... |
| Frequency band N | Δ Silica gel 1N, | Δ Metal 1N, | ... | Δ Silica gel 2N, | Δ Metal 2N, | ... | Δ Silica gel 3N, | Δ Metal 3N, | ... | ... |
| | frequency N2 | frequency N3 | | impedance xx | impedance xx | | circle chart location yy | circle chart location yy | | |

It should be understood that a mapping relationship shown in Table 4 may also be referred to as a second mapping relationship, that is, represents a mapping relationship between antenna parameter information of the first frequency band and antenna parameter information of the second frequency band.

It should be noted that antenna parameters shown in Table 1 to Table 4 and antenna parameter variations may be specific data or value ranges. This is determined based on settings of the test person.

The following describes the antenna tuning methods provided in embodiments of this application with reference to specific embodiments. The following several embodiments may be combined with each other, and a same or similar concept or process may not be described repeatedly in some embodiments.

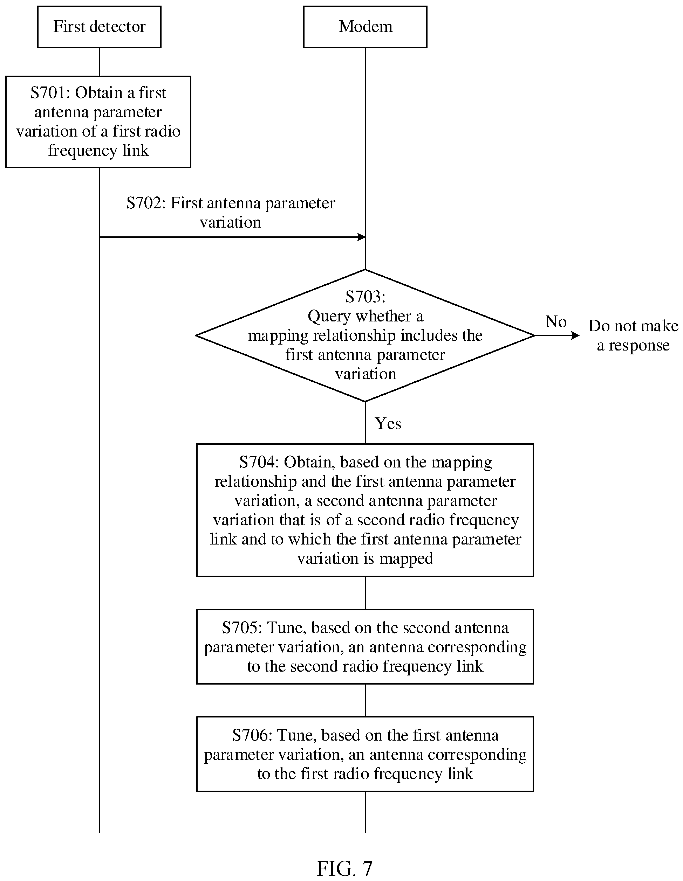

FIG. 7 is a schematic flowchart of an embodiment of an antenna tuning method according to an embodiment of this application. Refer to FIG. 7. The antenna tuning method provided in embodiments of this application may include the following steps.

S701: A first detector in a first radio frequency link obtains a first antenna parameter variation of the first radio frequency link.

In an embodiment, the first detector may collect an antenna parameter of the first radio frequency link. For example, the first detector collects an antenna parameter of the first radio frequency link in real time. In an embodiment, the first detector may obtain an antenna parameter variation of the first radio frequency link, namely, the first antenna parameter variation. For example, the first detector may calculate, in real time (or periodically) based on antenna parameters of the first radio frequency link, a difference between antenna parameters collected at two adjacent times. Alternatively, the first detector may detect differences between two adjacent parameters of a first parameter, an intermediate parameter, and a last parameter in a period of time. Alternatively, the first detector may detect a difference between antenna parameters at two preset moments in a period of time, for example, detect a difference between an antenna parameter at a third second and an antenna parameter at a thirtieth second in one minute.

The first antenna parameter variation may include but is not limited to a frequency offset, an impedance variation, and a circle chart offset distance.

S702: The first detector reports the first antenna parameter variation to a modem.

The first detector obtains the first antenna parameter variation, and may report the first antenna parameter variation to the modem.

In an embodiment, after collecting an antenna parameter of the first radio frequency link, the first detector may report the antenna parameter of the first radio frequency link to the modem, and the modem may calculate a difference between antenna parameters collected at two adjacent times, to obtain the first antenna parameter variation.

In an embodiment, that a first detector obtains a first antenna parameter variation of the first radio frequency link may be: obtaining a parameter value after proper calculation is performed on a detection value collected by the first detector, or obtaining a parameter value by directly mapping a detection value. In this embodiment of this application, the modem may tune, based on the first antenna parameter variation of the first radio frequency link, an antenna corresponding to a second radio frequency link.

Specifically, a manner in which the modem tunes, based on the first antenna parameter variation of the first radio frequency link, the antenna corresponding to the second radio frequency link may be: generating, by the modem, a control signal based on the first antenna parameter variation, to tune a tunable component in the second radio frequency link based on the control signal, to tune an antenna corresponding to the second radio frequency link.

In an embodiment, the modem may store a signal mapping relationship between the first antenna parameter variation and the control signal, and the modem may obtain, from the signal mapping relationship based on the first antenna parameter variation, control information mapped to the first antenna parameter variation. It should be understood that the control signal is used to tune the tunable component in the second radio frequency link.

In an embodiment, the modem may perform calculation and matching based on the first antenna parameter variation, to obtain a second antenna parameter variation of the second radio frequency link, and then generate a control signal based on the second antenna parameter variation, to tune, based on the control signal, the tunable component in the second radio frequency link, to tune the antenna corresponding to the second radio frequency link.

In an embodiment, the modem may obtain a second antenna parameter variation of the second radio frequency link based on the first antenna parameter variation and the mapping relationship in the foregoing embodiments, and then tune, based on the second antenna parameter variation, the antenna corresponding to the second radio frequency link. For details, refer to descriptions in S703 to S705.

S703: The modem queries whether the mapping relationship includes the first antenna parameter variation. If the mapping relationship includes the first antenna parameter variation, S704 is performed; or if the mapping relationship does not include the first antenna parameter variation, no response is made.

In some scenarios, the first antenna parameter variation is small, and does not reach an antenna parameter variation caused by contact of an object with an electronic device. In this case, the first antenna parameter variation is not in the mapping relationship. Alternatively, in some scenarios, an antenna parameter is not changed by contact of an object with an electronic device. In this scenario, the first antenna parameter variation does not overlap an antenna parameter variation in the mapping relationship, and the first antenna parameter variation is not in the mapping relationship either.

In this embodiment of this application, in response to receiving the first antenna parameter variation, the modem may query whether the mapping relationship includes the first antenna parameter variation. In an embodiment, the modem may store a mapping relationship (for example, including the first mapping relationship and/or the second mapping relationship). The modem may query the mapping relationship, and detect whether the mapping relationship includes the first antenna parameter variation, that is, detect whether antenna parameter variations in different states include the first antenna parameter variation.

If the mapping relationship does not include the first antenna parameter variation, the modem may not respond. If the mapping relationship includes the first antenna parameter variation, the modem may perform S704.

In an embodiment, after collecting an antenna parameter of the first radio frequency link, the first detector may report the antenna parameter of the first radio frequency link to the modem, and the modem may query whether a mapping relationship includes the antenna parameter of the first radio frequency link, for example, perform query based on the mapping relationship shown in Table 2. If the mapping relationship that the modem queries includes the antenna parameter of the first radio frequency link, the modem obtains an antenna parameter of the second radio frequency link (or an antenna parameter variation of the second radio frequency link, namely, a second antenna parameter variation) corresponding to the antenna parameter of the first radio frequency link, so that the modem may tune, based on the antenna parameter of the second radio frequency link or the antenna parameter variation of the second radio frequency link, the antenna corresponding to the second radio frequency link. If the mapping relationship that the modem queries does not include the antenna parameter of the first radio frequency link, the modem may not respond. In other words, in embodiments of this application, an antenna parameter (and/or an antenna parameter variation) in a radio frequency link that includes a detector and a pre-obtained mapping relationship may be used to obtain an antenna parameter (and/or an antenna parameter variation) in another radio frequency link that does not include a detector, to tune an antenna corresponding to the another radio frequency link that does not include a detector.

In an embodiment, in response to receiving an antenna parameter of the first radio frequency link, the modem may first query whether a mapping relationship includes the antenna parameter of the first radio frequency link (refer to the foregoing related descriptions). Alternatively, when the mapping relationship that the modem queries does not include the antenna parameter of the first radio frequency link, the modem may obtain the first antenna parameter variation of the first radio frequency link, and then perform S703. A manner in which the modem queries the mapping relationship is not limited in embodiments of this application. For example, the modem may query an antenna parameter or an antenna parameter variation, or first query an antenna parameter and then query an antenna parameter variation.

S704: The modem obtains, based on the mapping relationship and the first antenna parameter variation, the second antenna parameter variation that is of the second radio frequency link and to which the first antenna parameter variation is mapped.

When the mapping relationship includes the first antenna parameter variation, the modem may use, as the second antenna parameter variation of the second radio frequency link, an antenna parameter variation that is in the mapping relationship and to which the first antenna parameter variation is mapped. For example, if the first antenna parameter variation is a frequency offset, and the first antenna parameter variation is Δ silica gel 11, or is within a value range of Δ silica gel 11, the modem may use Δ silica gel 12 mapped to Δ silica gel 11 as the second antenna parameter variation of the second radio frequency link.

For example, the first antenna parameter variation includes a frequency offset, an impedance variation, and a circle chart offset distance. When the mapping relationship includes the first antenna parameter variation, for example, the first antenna parameter variation is a frequency offset Δ silica gel 11, an impedance variation Δ silica gel 21, and a circle chart offset distance Δ silica gel 31, the modem may use "a frequency offset Δ silica gel 12, an impedance variation Δ silica gel 22, and a circle chart offset distance Δ silica gel 32" to which "Δ silica gel 11, Δ silica gel 21, and Δ silica gel 31" are mapped as the second antenna parameter variation. It should be understood that the first antenna parameter variation may include at least one of a frequency offset, an impedance variation, and a circle chart offset distance.

S705: The modem tunes, based on the second antenna parameter variation, the antenna corresponding to the second radio frequency link.

For the electronic device shown in FIG. 1, the antenna corresponding to the second radio frequency link may be the antenna 2. For the electronic device shown in FIG. 2, the antenna corresponding to the second radio frequency link may be an antenna used when the second radio frequency link works.

It can be learned from the foregoing that, according to the antenna tuning method provided in embodiments of this application, the antenna corresponding to the second radio frequency link may be tuned based on the antenna parameter variation of the first radio frequency link that includes the detector. In an embodiment, the second radio frequency link does not include a detector, and the modem cannot obtain an antenna parameter of the second radio frequency link.

In an embodiment, the second radio frequency link may include a detector, and the modem may also obtain, based on an antenna parameter variation of the first radio frequency link that includes the detector, an antenna parameter variation of the second radio frequency link, to tune, based on the antenna parameter variation of the second radio frequency link, the antenna corresponding to the second radio frequency link.

In an embodiment, a manner in which the modem tunes the antenna corresponding to the second radio frequency link may include but is not limited to impedance tuning and aperture tuning. For example, impedance tuning and that an antenna parameter variation includes a frequency offset are used as an example. For example, if a first antenna parameter variation is a frequency offset -22 MHz, the modem may obtain, based on a mapping relationship, that a second antenna parameter variation mapped to the frequency offset -22 MHz is a "frequency offset -30 MHz", that is, a frequency offset of the second radio frequency link is -30 MHz. Therefore, the modem may adjust an inductor and a capacitor in the tunable component in the second radio frequency link, to increase an operating frequency of the antenna corresponding to the second radio frequency link by 30 MHz, to eliminate impact of another object on an antenna parameter caused by contact with the electronic device, avoid impact of the another object on communication quality of an antenna, and improve communication quality of the electronic device.

In an embodiment, the modem may query whether the mapping relationship includes the first antenna parameter variation. When the mapping relationship includes the first antenna parameter variation, the modem may determine, based on the first antenna parameter variation, which object is currently in contact with the electronic device. For example, if the first antenna parameter variation is a frequency offset -22 MHz, the modem may determine that a silicone cover is in contact with the electronic device, that is, the silicone cover is installed on the electronic device. In this way, in this embodiment, the modem may determine, based on an antenna parameter variation of a radio frequency link and a mapping relationship, a status of the electronic device, for example, a state in which a silicone cover is installed, a state in which a metal cover is installed, or a state in which the electronic device is held by a user. In other words, in embodiments of this application, the mapping relationship may alternatively be a mapping relationship between an antenna parameter variation of a first antenna (or a first frequency band), an antenna parameter variation of a second antenna (or a second frequency band), and a status of the electronic device. The electronic device may determine the status of the electronic device based on the antenna parameter variation of the first antenna (or the first frequency band) and the antenna parameter variation of the second antenna (or the second frequency band).

In this embodiment, the modem determines the status of the electronic device, and may adjust the inductor and the capacitor in the tunable component on the second radio frequency link, to adjust the antenna corresponding to the second radio frequency link, to eliminate impact of another object on an antenna parameter caused by contact with the electronic device, avoid impact of the another object on communication quality of an antenna, and improve communication quality of the electronic device.

In an embodiment, when a user installs a metal cover or a magnetic attraction cover on the electronic device, the metal cover or the magnetic attraction cover has obvious impact on a first antenna parameter variation and a second antenna parameter variation. For example, a frequency is decreased by a very large value and cannot be adjusted to an original frequency of an antenna by using a tuning component. This causes poor communication quality of the antenna. In this case, the modem may send an indication to an application at an application layer in the electronic device, to indicate the application to output prompt information.

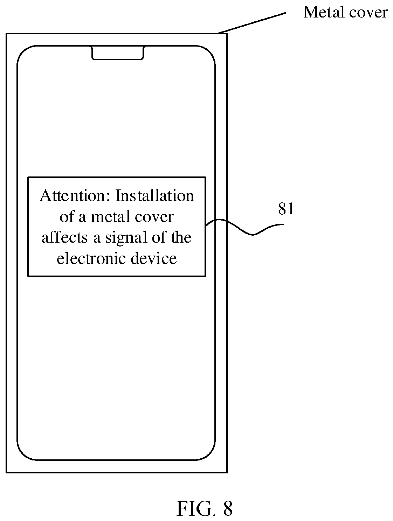

The application may output prompt information in response to the indication. The prompt information is used to prompt the user that "Installing the metal cover or the magnetic attraction cover case affects a signal of the electronic device". In an embodiment, the application program may prompt the user in a manner of displaying prompt information on an interface of the electronic device, or in a manner of playing prompt information by using a voice. An output manner of the prompt information is not limited in embodiments of this application. For example, refer to FIG. 8. When a user installs a metal cover for an electronic device, a dialog box 81 including prompt information is displayed on an interface of the electronic device, and the prompt information "Installing a metal cover affects a signal of an electronic device, please pay attention" is displayed in the dialog box 81.

In an embodiment, the mapping relationship may alternatively be a mapping relationship between an antenna parameter variation of a first antenna (or a first frequency band), an antenna parameter variation of a second antenna (or a second frequency band), a status of the electronic device, a status of the first antenna, and a status of the second antenna. For example, the antenna status may include: a frequency decreases by a first value, or an impedance decreases by a second value. In this embodiment, the electronic device may determine the status of the electronic device, the status of the first antenna, and the status of the second antenna based on the antenna parameter variation of the first antenna (or the first frequency band) and the antenna parameter variation of the second antenna (or the second frequency band).

The antenna tuning method provided in embodiments of this application may further include step S706.

S706: The modem tunes, based on the first antenna parameter variation, an antenna corresponding to the first radio frequency link.

For S706, refer to the descriptions in S705. It should be understood that S706 and S703 are not distinguished in a sequence, and may be performed simultaneously.

In embodiments of this application, the modem may determine, based on a mapping relationship preset in the electronic device and the first antenna parameter variation of the radio frequency link that includes the detector, the second antenna parameter variation of the radio frequency link that does not include the detector, and then tune, based on the second antenna parameter variation, the antenna corresponding to the radio frequency link that does not includes the detector. This can improve communication quality of the antenna, and has high tuning precision.

Based on the embodiment shown in FIG. 7, in an embodiment, the modem may further obtain, based on a mapping relationship between a reflection coefficient variation of a first radio frequency link that has a TX function and a reflection coefficient variation of each antenna (or frequency band), a reflection coefficient variation of a second radio frequency link that has an RX function, to tune an antenna corresponding to the second radio frequency link that has the RX function. In an embodiment, the second radio frequency link may not have a TX function. It should be understood that a reflection coefficient variation may also be included in an antenna parameter variation. For a manner of obtaining a mapping relationship of a reflection coefficient variation of each antenna (or frequency band), refer to related descriptions in the foregoing embodiments.

In this example, for a GPS radio frequency link and a Wi-Fi radio frequency link that share an antenna, the GPS radio frequency link does not include a TX function. Therefore, the modem cannot obtain a reflection coefficient of the GPS radio frequency link, and cannot tune, based on the reflection coefficient of the GPS radio frequency link, an antenna corresponding to the GPS radio frequency link. In this embodiment of this application, the modem may obtain a reflection coefficient variation of the GPS radio frequency link based on a reflection coefficient variation of the Wi-Fi radio frequency link and a mapping relationship between the reflection coefficient variation of the Wi-Fi radio frequency link and the reflection coefficient variation of the GPS radio frequency link, to implement that the modem tunes, based on the reflection coefficient variation of the GPS radio frequency link, the antenna corresponding to the GPS radio frequency link.

In some scenarios, for a radio frequency link that includes a detector or a TX function, in the conventional technology, a modem may tune, based on an antenna parameter of the radio frequency link detected by the detector, an antenna corresponding to the radio frequency link. For example, in S706, the modem may tune, based on the first antenna parameter variation, the antenna corresponding to the first radio frequency link. In this manner, precision of tuning by the modem depending only on a monotonous first antenna parameter variation is low.

In the antenna tuning method provided in embodiments of this application, for a radio frequency link that includes a detector or a TX function, an antenna corresponding to the radio frequency link may be tuned based on an antenna parameter that is of the radio frequency link and that is detected by the detector, and an antenna parameter variation that is of another radio frequency link and to which an antenna parameter variation of the radio frequency link is mapped. Because embodiments of this application combines a plurality of factors, antenna tuning precision can be improved.

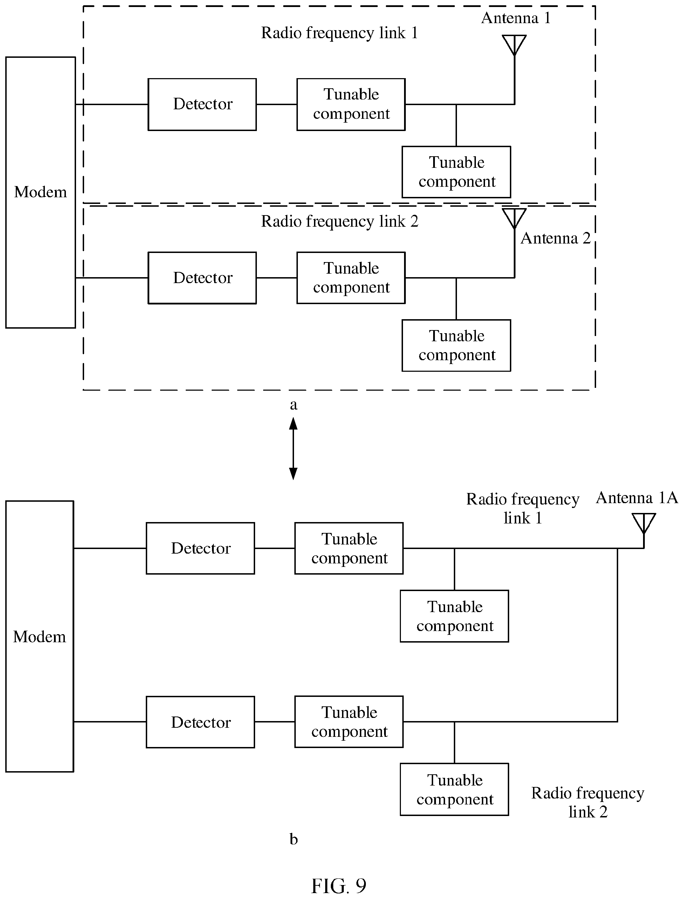

FIG. 9 is a schematic diagram of another structure of an electronic device. A difference between a in FIG. 9 and FIG. 1 lies in that each radio frequency link in a in FIG. 9 includes a detector, and a difference between b in FIG. 9 and FIG. 2 lies in that each radio frequency link in b in FIG. 9 includes a detector.

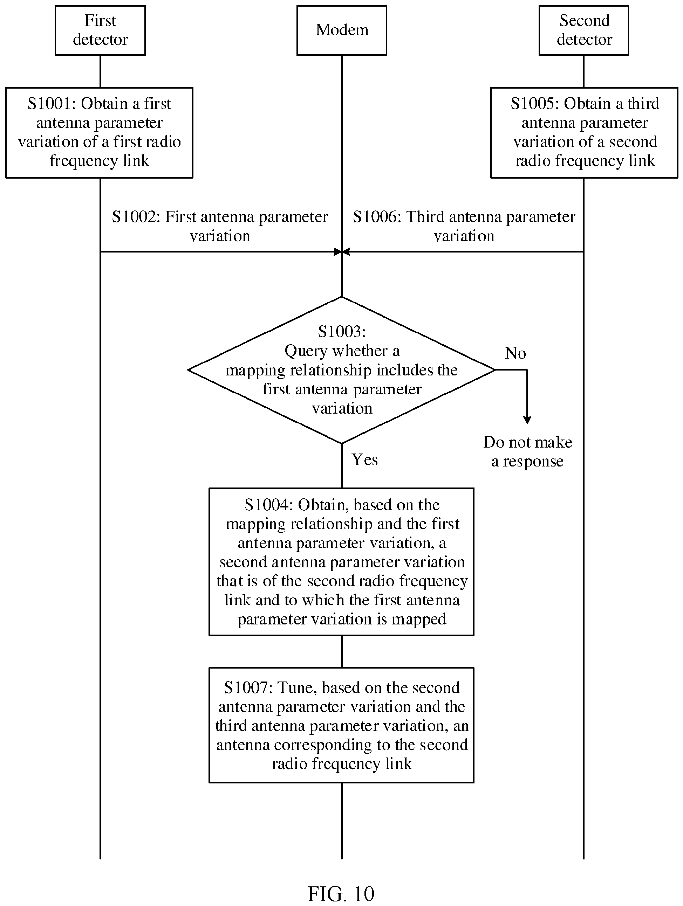

In the scenario of the electronic device shown in FIG. 9, refer to FIG. 10. An antenna tuning method provided in embodiments of this application may include the following steps.

S1001: A first detector in a first radio frequency link obtains a first antenna parameter variation of the first radio frequency link.

S1002: The first detector reports the first antenna parameter variation to a modem.

S1003: The modem queries whether a mapping relationship includes the first antenna parameter variation. If the mapping relationship includes the first antenna parameter variation, S1004 is performed; or if the mapping relationship does not include the first antenna parameter variation, no response is made.

S1004: The modem obtains, based on the mapping relationship and the first antenna parameter variation, a second antenna parameter variation that is of a second radio frequency link and to which the first antenna parameter variation is mapped.

For S1001 to S1004, refer to descriptions in S701 to S704.

S1005: A second detector in the second radio frequency link obtains a third antenna parameter variation of the second radio frequency link.

S1006: The second detector reports the third antenna parameter variation to the modem.

For S1005 and S1006, refer to descriptions in S701 and S702. S1001 and S1002, and S 1005 and S 1006 are not distinguished in a sequence, and may be performed simultaneously.

S1007: The modem tunes, based on the second antenna parameter variation and the third antenna parameter variation, an antenna corresponding to the second radio frequency link.

In this embodiment of this application, the modem may tune, with reference to the third antenna parameter variation and the second antenna parameter variation mapped from the first antenna parameter variation, the antenna corresponding to the second radio frequency link. The third antenna parameter variation is collected by the second detector in the second radio frequency link. Because the modem further tunes the antenna of the second radio frequency link with reference to the third antenna parameter and the second antenna parameter, accuracy of tuning the antenna corresponding to the second radio frequency link can be improved.

For example, an antenna parameter variation is a frequency offset. The third antenna parameter variation represents that a frequency offset is -25 MHz, and the second antenna parameter variation obtained through mapping based on the first antenna parameter variation represents that a frequency offset is -30 MHz. To improve antenna communication quality, the modem may increase a frequency of the antenna corresponding to the second radio frequency link by 30 MHz. However, in the conventional technology, if the frequency of the antenna corresponding to the second radio frequency link is increased by 25 MHz only based on the third antenna parameter variation, antenna communication quality is still poor, and a user requirement cannot be met. However, in this embodiment of this application, the frequency of the antenna corresponding to the second radio frequency link may be increased based on a frequency offset with a large absolute value. This can accurately improve antenna communication quality, meet a user requirement, and can improve user experience.

Similarly, the modem may query whether the mapping relationship includes the third antenna parameter variation. If the mapping relationship includes the third antenna parameter variation, the modem may obtain, based on the mapping relationship and the third antenna parameter variation, a fourth antenna parameter variation that is of the first radio frequency link and to which the third antenna parameter variation is mapped, so that the modem may tune, based on the first antenna parameter variation and the fourth antenna parameter variation, an antenna corresponding to the first radio frequency link. For details, refer to related descriptions in FIG. 10.

In an embodiment, the first radio frequency link may be replaced with a "third radio frequency link", the second radio frequency link may be replaced with a "first radio frequency link", the first antenna parameter variation of the first radio frequency link may be replaced with a "third antenna parameter variation", the "third antenna parameter variation" is mapped to the "fourth antenna parameter variation", and the third antenna parameter variation of the second radio frequency link may be replaced with a "first antenna parameter variation". In this way, "The modem tunes, based on the second antenna parameter variation and the third antenna parameter variation, an antenna corresponding to the second radio frequency link" may be replaced with "The modem tunes, based on the first antenna parameter variation and the fourth antenna parameter variation, the antenna corresponding to the first radio frequency link".

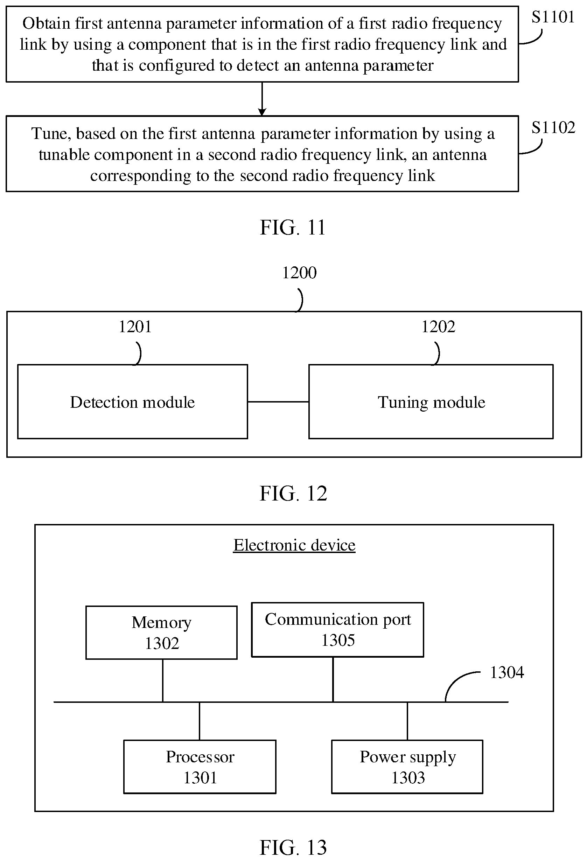

In an embodiment, with reference to the foregoing embodiments, the antenna tuning methods provided in this application may be performed by an electronic device, or a processor, a chip, or a modem in the electronic device. From a perspective of an execution body, refer to FIG. 11. An antenna tuning method provided in embodiments of this application may include the following steps.

S1101: Obtain first antenna parameter information of a first radio frequency link by using a component that is in the first radio frequency link and that is configured to detect an antenna parameter.

For S1101, refer to related descriptions in S701 and S702 in the foregoing embodiment.

S1102: Tune, based on the first antenna parameter information by using a tunable component in a second radio frequency link, an antenna corresponding to the second radio frequency link.

For S1102, refer to related descriptions in S702 to S705 in the foregoing embodiment.

In an embodiment, a control signal may be generated based on a first antenna parameter variation, to tune the tunable component in the second radio frequency link based on the control signal, to tune the antenna corresponding to the second radio frequency link.

In an embodiment, a second antenna parameter variation of the second radio frequency link may be obtained based on a first antenna parameter variation and the mapping relationship in the foregoing embodiments, to tune, based on the second antenna parameter variation, the antenna corresponding to the second radio frequency link.

Alternatively, in an embodiment, S703 to S705 may be performed, to tune the antenna corresponding to the second radio frequency link.

In embodiments of this application, an antenna corresponding to a radio frequency link that does not include a detector may be tuned based on first antenna parameter information of a radio frequency link that includes a detector. This can improve communication quality of the antenna.

FIG. 12 is a schematic diagram of a structure of an antenna tuning apparatus according to an embodiment of this application. The antenna tuning apparatus may be the electronic device in the foregoing embodiments, or a processor, a chip, or a modem in the electronic device. The electronic device includes a first radio frequency link and a second radio frequency link, the first radio frequency link includes a component configured to detect an antenna parameter, and the second radio frequency link includes a tunable component.

Refer to FIG. 12. The antenna tuning apparatus 1200 may include: a detection module 1201 and a tuning module 1202.

The detection module 1201 is configured to obtain first antenna parameter information of the first radio frequency link.

The tuning module 1202 tunes, based on the first antenna parameter information by using the tunable component in the second radio frequency link, an antenna corresponding to the second radio frequency link.

In a possible implementation, the tuning module 1202 is specifically configured to: generate a control signal based on the first antenna parameter information; and tune, based on the control signal by using the tunable component, the antenna corresponding to the second radio frequency link.

In a possible implementation, the tuning module 1202 is specifically configured to: obtain second antenna parameter information of the second radio frequency link based on the first antenna parameter information; and tune, based on the second antenna parameter information by using the tunable component, the antenna corresponding to the second radio frequency link.

In a possible implementation, the tuning module 1202 is specifically configured to obtain the second antenna parameter information based on the first antenna parameter information and a mapping relationship, where the mapping relationship is a mapping relationship between antenna parameter information of the first radio frequency link and antenna parameter information of the second radio frequency link.

In a possible implementation, the first antenna parameter information includes a first antenna parameter and/or a first antenna parameter variation.

In a possible implementation, the first antenna parameter includes a frequency of a resonance location of an antenna corresponding to the first radio frequency link, and/or a location of the frequency in a Smith chart, and/or an input impedance of the antenna, and/or an amplitude and a phase of a reflection coefficient of the antenna; and the first antenna parameter variation includes a frequency offset, and/or a circle chart offset distance, and/or an impedance variation, where the circle chart offset distance is a vector distance; and the frequency offset includes an offset of a frequency, or the frequency offset includes an offset of a frequency and a variation of an amplitude of a reflection coefficient at the frequency.

In a possible implementation, the first radio frequency link corresponds to a first antenna, the second radio frequency link corresponds to a second antenna, and the mapping relationship is a mapping relationship between antenna parameter information of the first antenna and antenna parameter information of the second antenna.

In a possible implementation, the first radio frequency link and second radio frequency link correspond to a same antenna, the first radio frequency link works on a first frequency band, the second radio frequency link works on a second frequency band, and the first frequency band and the second frequency band are different or the same; and the mapping relationship is a mapping relationship between antenna parameter information of the first frequency band and antenna parameter information of the second frequency band.

In a possible implementation, the mapping relationship is a mapping relationship between the antenna parameter information of the first radio frequency link, the antenna parameter information of the second radio frequency link, and a status of the electronic device, and the status of the electronic device includes: a state in which an object is in contact with the electronic device, and a state in which no object is in contact with the electronic device.

The tuning module 1202 is configured to obtain the status of the electronic device based on the first antenna parameter information, the second antenna parameter information, and the mapping relationship.

In a possible implementation, the object includes a human body and a non-human body, and the non-human body includes a cover.

In a possible implementation, the status of the electronic device includes a cover state.

The tuning module 1202 is configured to output prompt information in response to that the status of the electronic device is the cover state, where the prompt information indicates that a cover that is in contact with the electronic device affects communication quality of an antenna in the electronic device, and the cover is a metal cover or a magnetic attraction cover.

In a possible implementation, the tuning module 1202 is further configured to determine whether the mapping relationship includes the first antenna parameter information.

In a possible implementation, the second radio frequency link does not include a component configured to detect an antenna parameter.

In a possible implementation, the second radio frequency link includes a component configured to detect an antenna parameter.

In a possible implementation, the tuning module 1202 is further configured to: obtain third antenna parameter information of the second radio frequency link by using the component that is in the second radio frequency link and that is configured to detect an antenna parameter; and tune, based on the second antenna parameter information and the third antenna parameter information, the antenna corresponding to the second radio frequency link.

The antenna tuning apparatus in this embodiment of this application may perform the antenna tuning methods in the foregoing embodiments, and can achieve a same technical effect as that in the foregoing embodiments. Details are not described herein again.

In an embodiment, refer to FIG. 13. An embodiment of this application further provides an electronic device. The electronic device may be the electronic device in the foregoing embodiments. The electronic device may include a processor 1301 (for example, a CPU) and a memory 1302. The memory 1302 may include a high-speed random access memory (random access memory, RAM), or may include a non-volatile memory (non-volatile memory, NVM), for example, at least one disk memory. The memory 1302 may store various instructions, to complete various processing functions and implement the method steps of this application.

Optionally, the electronic device in this application may further include a power supply 1303, a communication bus 1304, and a communication port 1305. The communication port 1305 is configured to implement connection and communication between the electronic device and another peripheral. In this embodiment of this application, the memory 1302 is configured to store computer executable program code, where the program code includes instructions. When the processor 1301 executes the instructions, the instructions enable the processor 1301 of the electronic device to execute an action in the foregoing method embodiments. An implementation principle and a technical effect thereof are similar, and details are not described herein again.

It should be noted that modules or components in the foregoing embodiments may be configured for one or more integrated circuits for implementing the foregoing methods, for example, one or more application-specific integrated circuits (application specific integrated circuit, ASIC), one or more microprocessors (digital signal processor, DSP), or one or more field programmable gate arrays (field programmable gate array, FPGA). For another example, when a specific module is implemented in a form of scheduling program code by the processing element, the processing element may be a general-purpose processor, for example, a central processing unit (central processing unit, CPU) or another processor that may invoke the program code. For another example, these modules may be integrated together and implemented in a form of a system-on-a-chip (system-on-a-chip, SOC).

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive (SSD)), or the like.

The term "a plurality of" in this specification refers to two or more. The term "and/or" in this specification describes only an association relationship between associated objects and indicates that three relationships may exist. For example, A and/or B may represent the following cases: Only A exists, both A and B exist, and only B exists. In addition, a character "/" in this specification usually indicates an "or" relationship between associated objects, and a character "/" in a formula usually indicates a "divisible" relationship between associated objects. In addition, it should be understood that in descriptions of this application, terms such as "first" and "second" are merely for purpose of differentiation and description, but should not be understood as indication or implication of relative importance or indication or implication of an order.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. An antenna tuning method, wherein an electronic device comprises a first radio frequency link and a second radio frequency link, the first radio frequency link comprises a component configured to detect an antenna parameter, the second radio frequency link comprises a tunable component, and the method comprises:
obtaining first antenna parameter information of the first radio frequency link by using the component that is in the first radio frequency link and that is configured to detect an antenna parameter; and
tuning, based on the first antenna parameter information by using the tunable component in the second radio frequency link, an antenna corresponding to the second radio frequency link.

2. The method according to claim 1, wherein the tuning an antenna corresponding to the second radio frequency link comprises:
generating a control signal based on the first antenna parameter information; and
tuning, based on the control signal by using the tunable component, the antenna corresponding to the second radio frequency link.

3. The method according to claim 1, wherein the tuning an antenna corresponding to the second radio frequency link comprises:
obtaining second antenna parameter information of the second radio frequency link based on the first antenna parameter information; and
tuning, based on the second antenna parameter information by using the tunable component, the antenna corresponding to the second radio frequency link.

4. The method according to claim 2, wherein the obtaining second antenna parameter information of the second radio frequency link comprises:
obtaining the second antenna parameter information based on the first antenna parameter information and a mapping relationship, wherein the mapping relationship is a mapping relationship between antenna parameter information of the first radio frequency link and antenna parameter information of the second radio frequency link.

5. The method according to any one of claims 1 to 4, wherein the first antenna parameter information comprises a first antenna parameter and/or a first antenna parameter variation.

6. The method according to claim 5, wherein
the first antenna parameter comprises a frequency of a resonance location of an antenna corresponding to the first radio frequency link, and/or a location of the frequency in a Smith chart, and/or an input impedance of the antenna, and/or an amplitude and a phase of a reflection coefficient of the antenna; and the first antenna parameter variation comprises a frequency offset, and/or a circle chart offset distance, and/or an impedance variation, wherein the circle chart offset distance is a vector distance; and
the frequency offset comprises an offset of a frequency, or the frequency offset comprises an offset of a frequency and a variation of an amplitude of a reflection coefficient at the frequency.

7. The method according to claim 4, wherein the first radio frequency link corresponds to a first antenna, and the second radio frequency link corresponds to a second antenna; and
the mapping relationship is a mapping relationship between antenna parameter information of the first antenna and antenna parameter information of the second antenna.

8. The method according to claim 4, wherein the first radio frequency link and the second radio frequency link correspond to a same antenna, the first radio frequency link works on a first frequency band, the second radio frequency link works on a second frequency band, and the first frequency band and the second frequency band are different or the same; and
the mapping relationship is a mapping relationship between antenna parameter information of the first frequency band and antenna parameter information of the second frequency band.

9. The method according to claim 4, wherein the mapping relationship is a mapping relationship between the antenna parameter information of the first radio frequency link, the antenna parameter information of the second radio frequency link, and a status of the electronic device, and the status of the electronic device comprises: a state in which an object is in contact with the electronic device, and a state in which no object is in contact with the electronic device; and the method further comprises:
obtaining the status of the electronic device based on the first antenna parameter information, the second antenna parameter information, and the mapping relationship.

10. The method according to claim 9, wherein the object comprises a human body and a non-human body, and the non-human body comprises a cover.

11. The method according to claim 10, wherein the status of the electronic device comprises a cover state, and the method further comprises:
outputting prompt information in response to that the status of the electronic device is the cover state, wherein the prompt information indicates that a cover that is in contact with the electronic device affects communication quality of an antenna in the electronic device, and the cover is a metal cover or a magnetic attraction cover.

12. The method according to claim 4, wherein before obtaining the second antenna parameter information of the second radio frequency link based on the first antenna parameter information, the method further comprises:
determining whether the mapping relationship comprises the first antenna parameter information.

13. The method according to any one of claims 1 to 12, wherein the second radio frequency link does not comprise a component configured to detect an antenna parameter.

14. The method according to claim 4, wherein the second radio frequency link comprises a component configured to detect an antenna parameter.

15. The method according to claim 14, wherein the method further comprises:
obtaining third antenna parameter information of the second radio frequency link by using the component that is in the second radio frequency link and that is configured to detect an antenna parameter; and
tuning, based on the second antenna parameter information and the third antenna parameter information, the antenna corresponding to the second radio frequency link.

16. An antenna tuning apparatus, comprising:
a detection module, configured to obtain first antenna parameter information of a first radio frequency link; and
a tuning module, configured to tune, based on the first antenna parameter information by using a tunable component in a second radio frequency link, an antenna corresponding to the second radio frequency link.

17. An electronic device, comprising a processor and a memory, wherein
the memory stores computer-executable instructions; and
the processor executes the computer-executable instructions stored in the memory, to enable the processor to perform the method according to any one of claims 1 to 15.

18. A computer-readable storage medium, wherein the computer-readable storage medium stores a computer program or instructions, and when the computer program or the instructions are run, the method according to any one of claims 1 to 15 is implemented.

19. A computer program product, comprising a computer program or instructions, wherein when the computer program or the instructions are executed by a processor, the method according to any one of claims 1 to 15 is implemented.

20. A program product, wherein the program product comprises a computer program, the computer program is stored in a readable storage medium, at least one processor of a communication apparatus may read the computer program from the readable storage medium, and the at least one processor executes the computer program, so that the communication apparatus implements the method according to any one of claims 1 to 15.
